# EUROPÄISCHE PATENTSCHRIFT

(11) **EP 3 837 123 B1**
(45) Veröffentlichungstag und Bekanntmachung des Hinweises auf die Patenterteilung: **07.09.2022**
(21) Anmeldenummer: 19739238.4
(22) Anmeldetag: 08.07.2019
(51) Int. Cl.: B60C 19/00, B60C 23/04

(54) **TECHNISCHER GUMMIARTIKEL AUFWEISEND MINDESTENS EINE SENDE- UND/ODER EMPFANGSVORRICHTUNG UND VERWENDUNG EINER KLEBEMITTELZUSAMMENSETZUNG ZUR BEFESTIGUNG MINDESTENS EINER SENDE- UND/ODER EMPFANGSVORRICHTUNG AUF EINER FLÄCHE EINES TECHNISCHEN GUMMIARTIKELS**
TECHNICAL RUBBER ITEM CONTAINING AT LEAST ONE SENDING AND/OR RECEIVING DEVICE AND USE OF AN ADHESIVE COMPOSITION FOR ATTACHING AT LEAST ONE SENDING AND/OR RECEIVING DEVICE ON A SURFACE OF A TECHNICAL RUBBER ITEM
ARTICLE EN CAOUTCHOUC TECHNIQUE COMPRENANT AU MOINS UN DISPOSITIF DE RÉCEPTION ET/OU DISPOSITIF D'ENVOI ET UTILISATION D'UN ADDHESIF POUR FIXER AU MOINS UN DISPOSITIF DE RÉCEPTION ET/OU DISPOSITIF D'ENVOI SUR UNE SURFACE D'UN ARTICLE EN CAOUTCHOUC TECHNIQUE

(30) Priorität: 14.08.2018 DE 102018213664
(43) Veröffentlichungstag der Anmeldung: 23.06.2021
(73) Patentinhaber: Continental Reifen Deutschland GmbH, 30165 Hannover (DE)
(72) Erfinder: GUARDALABENE, Joe, 30165 Hannover (DE)
(74) Vertreter: Continental Corporation
(86) Internationale Anmeldenummer: PCT/EP2019/068191
(87) Internationale Veröffentlichungsnummer: WO 2020/035215

(56) Entgegenhaltungen:
- DE-A1- 3 703 128
- DE-A1-102006 010 736
- US-A1- 2004 164 558
- US-A1- 2007 103 285

## Beschreibung

Die Erfindung betrifft einen technischen Gummiartikel aufweisend mindestens eine Sende- und/oder Empfangsvorrichtung und die Verwendung einer Klebemittelzusammensetzung zur Befestigung mindestens einer Sende- und/oder Empfangsvorrichtung auf einer Fläche eines technischen Gummiartikels.

Im Stand der Technik ist bekannt, dass technische Gummiartikel, insbesondere Fahrzeugluftreifen, elektromagnetische Sende- und Empfangsvorrichtungen aufweisen können. Beispielsweise wird in der DE102004045262A1 ein Fahrzeugreifen offenbart, wobei der Fahrzeugreifen eine Karkasse und einen integrierten Transponder aufweist. Bei dem integrierten Transponder handelt es sich um eine elektromagnetische Sende- und Empfangsvorrichtung.

Eine Herausforderung bei der Anbringung von Sende- und/oder Empfangsvorrichtungen an oder in technischen Gummiartikeln, wie insbesondere Fahrzeugreifen, besteht in der Haltbarkeit im Verbindungsbereich. Aufgrund dauerhafter Belastung oder Materialalterung können sich die Sende- und/oder Empfangsvorrichtungen vom technischen Gummiartikel lösen. Dies kann ein unerwünschtes Entfernen der Sende- und/oder Empfangsvorrichtungen vom technischen Gummiartikel oder zumindest die Ausbildung von Störstellen innerhalb des technischen Gummiartikels oder im Verbindungsbereich zwischen Sende- und/oder Empfangsvorrichtung und technischem Gummiartikel verursachen.

Der vorliegenden Erfindung liegt daher die Aufgabe zugrunde, einen technischen Gummiartikel aufweisend mindestens eine Sende- und/oder Empfangsvorrichtung bereitzustellen, bei dem eine ausreichende Anhaftung der mindestens einen Sende- und/oder Empfangsvorrichtung über die gesamte Lebensdauer des technischen Gummiartikels sichergestellt sein soll.

Gelöst wird diese Aufgabe dadurch, dass die mindestens eine Sende- und/oder Empfangsvorrichtung mittels eines Klebemittels haftend an dem technischen Gummiartikel angebracht ist, wobei das Klebemittel wenigstens folgende Bestandteile enthält:
- 10 bis 80 Gew.-% wenigstens eines Kautschuks, und
- 11 bis 80 Gew.-% wenigstens eines Polyolefins, und
- 2 bis 20 Gew.-% wenigstens eines Kohlenwasserstoffharzes.

Dadurch, dass das Klebemittel die genannten Substanzen in den genannten Mengen enthält, ist es insbesondere kompatibel mit den Materialien technischer Gummiartikel. Es weist zudem eine optimierte Viskosität und damit ein optimiertes Fließverhalten auf bei einer gleichzeitig sehr guten Klebrigkeit.

Somit ist dadurch, dass die mindestens eine Sende- und/oder Empfangsvorrichtung mittels des Klebemittels an den technischen Gummiartikel angebracht ist, die Anhaftung der mindestens einen Sende- und/oder Empfangsvorrichtung über die Lebensdauer des technischen Gummiartikels sichergestellt.

Ein weiterer Gegenstand der vorliegenden Erfindung ist die Verwendung einer Klebemittelzusammensetzung (auch kurz Klebemittel) zur Befestigung mindestens einer Sende- und/oder Empfangsvorrichtung auf einer Fläche eines technischen Gummiartikels, wobei das Klebemittel wenigstens die folgenden Bestandteile enthält:
- 10 bis 80 Gew.-% wenigstens eines Kautschuks, und
- 11 bis 80 Gew.-% wenigstens eines Polyolefins, und
- 2 bis 20 Gew.-% wenigstens eines Kohlenwasserstoffharzes.

Unter einer Sende- und/oder Empfangsvorrichtung wird insbesondere eine elektromagnetische Sende- und/oder Empfangsvorrichtung verstanden. Hierbei kann es sich prinzipiell um jegliche Vorrichtungen handeln, die dazu geeignet sind elektromagnetische Signale zu senden und/oder zu empfangen.

Beispielsweise und bevorzugt ist mindestens eine Sende- und/oder Empfangsvorrichtung ein Transponder, welcher insbesondere ein Beispiel für eine Sende- und Empfangsvorrichtung ist. Gemäß einer vorteilhaften Ausführungsform der Erfindung ist mindestens eine Sende- und/oder Empfangsvorrichtung ein Radiofrequenzidentifizierungstransponder (RFID-Transponder). RFID-Transponder haben ein breites Anwendungsspektrum für eine Vielzahl von technischen Fragestellungen. Mit der vorliegenden Erfindung ist es möglich, RFID-Transponder zuverlässig und langlebig an technischen Gummiartikeln anzubringen, insbesondere an Fahrzeugreifen.

Beispielsweise und bevorzugt ist mindestens eine Sende- und/oder Empfangsvorrichtung ein Sensor, welcher insbesondere ein Beispiel für eine Empfangsvorrichtung ist. Sensoren haben ebenfalls ein breites Anwendungsspektrum für eine Vielzahl von technischen Fragestellungen. Mit der vorliegenden Erfindung ist es möglich, Sensoren zuverlässig und langlebig an technischen Gummiartikeln anzubringen, insbesondere an Fahrzeugreifen.

Gemäß einer vorteilhaften Ausführungsform der Erfindung ist mindestens eine Sende- und/oder Empfangsvorrichtung ein Drucksensor, insbesondere ein Drucksensor für Fahrzeugreifen.

Der technische Gummiartikel kann dabei auch zwei oder mehrere gleiche oder voneinander verschiedene Sende- und/oder Empfangsvorrichtungen aufweisen, wobei mindestens eine der Sende- und/oder Empfangsvorrichtungen, bevorzugt alle vorhandenen Sende- und/oder Empfangsvorrichtungen, mittels des Klebemittels haftend angebracht sind.

Die mindestens eine Sende- und/oder Empfangsvorrichtung kann dabei prinzipiell an jegliche Fläche des technischen Gummiartikels, insbesondere Fahrzeugreifens, angebracht sein.

Gemäß vorteilhafter Ausführungsformen ist der technische Gummiartikel ein Fahrzeugreifen, insbesondere und beispielsweise ein Fahrzeugluftreifen.

Bei der Fläche des Fahrzeugreifens, an die die mindestens eine Sende- und/oder Empfangsvorrichtung angebracht ist, kann es sich prinzipiell um jede Fläche handeln, auf der die mindestens eine Sende- und/oder Empfangsvorrichtung für die Nutzung über einen längeren Zeitraum, insbesondere für eine lange Haltbarkeit im Fahrbetrieb und der Lebensdauer des Reifens, angebracht werden kann. Gemäß vorteilhafter Ausführungsformen der Erfindung ist es vorgesehen, die mindestens eine Sende- und/oder Empfangsvorrichtung im Inneren des Reifens anzubringen, und zwar beispielsweise auf der Innenschicht.

Die Fläche kann dabei jede denkbare Größe haben und richtet sich nach der Geometrie und den Maßen der jeweiligen Sende- und/oder Empfangsvorrichtung.

Im Folgenden werden die Bestandteile des Klebemittels des erfindungsgemäßen technischen Gummiartikels sowie der erfindungsgemäßen Verwendung näher ausgeführt.

Das Klebemittel enthält erfindungsgemäß die folgenden Bestandteile:
- 10 bis 80 Gew.-% wenigstens eines Kautschuks, und
- 11 bis 80 Gew.-% wenigstens eines Polyolefins, und
- 2 bis 20 Gew.-% wenigstens eines Kohlenwasserstoffharzes.

Bei dem Kautschuk kann es sich prinzipiell um jeglichen dem Fachmann bekannten Kautschuk handeln.

Für den Fall, dass das Klebemittel zwei oder mehrere verschiedene Kautschuke enthält, beträgt die Gesamtmenge 10 bis 80 Gew.-% bzw. sind die Mengenangaben auf die Gesamtmenge an enthaltenen Kautschuken bezogen, sofern nichts anderes angegeben ist.

Gemäß einer bevorzugten Ausführungsform der Erfindung handelt es sich um wenigstens einen Dienkautschuk.

Bevorzugt enthält das Klebemittel somit 10 bis 80 Gew.-% wenigstens eines Dienkautschuks.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen. Der wenigstens eine Dienkautschuk ist dabei bevorzugt ausgewählt aus der Gruppe bestehend aus natürlichem Polyisopren (Naturkautschuk, NR), synthetischem Polyisopren (IR), epoxidiertem Polyisopren, Butadien-Kautschuk (Polybutadien, BR), Butadien-Isopren-Kautschuk, lösungspolymerisiertem Styrol-Butadien-Kautschuk (SSBR), emulsionspolymerisiertem Styrol-Butadien-Kautschuk (ESBR), Styrol-Isopren-Kautschuk, Flüssigkautschuken mit einem Gewichtsmittel des Molekulargewichts Mw gemäß GPC von größer als 20000 g/mol, Halobutyl-Kautschuk, Polynorbornen, Isopren-Isobutylen-Copolymer, Ethylen-Propylen-DienKautschuk, Nitril-Kautschuk, Chloropren-Kautschuk, Acrylat-Kautschuk, FluorKautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk und hydriertem Styrol-Butadien-Kautschuk.

Gemäß einer besonders vorteilhaften Ausführungsform der Erfindung ist der Kautschuk ausgewählt aus der Gruppe bestehend aus Naturkautschuk (NR), synthetisches Polyisopren (IR), Butadien-Kautschuk (BR), Styrol-Butadien-Kautschuk (SBR), Butyl-Kautschuk (IIR) und Halobutyl-Kautschuk. Derartige Kautschuke finden in Bauteilen von Fahrzeugreifen Verwendung und sind daher besonders kompatibel mit den an das Klebemittel angrenzenden Bauteilen.

Bei dem Butylkautschuk kann es sich um jeden dem Fachmann bekannten Butylkautschuk handeln. Butylkautschuk im Klebemittel hat den Vorteil, dass es kompatibel mit dem Kautschuk der Innenschicht des Fahrzeugreifens ist und eine vergleichsweise hohe Luftdichtigkeit aufweist. Zudem tragen 10 bis 80 Gew.-% wenigstens eines Butylkautschuks dazu bei, dass das Klebemittel die für die beschriebene Anwendung geeignete Viskosität aufweist.

Gemäß einer bevorzugten Ausführungsform der Erfindung beträgt die Menge des wenigstens einen Butylkautschuks 20 bis 40 Gew.-%, besonders bevorzugt 20 bis 38 Gew.-%, wiederum besonders bevorzugt 20 bis 28 Gew.-%, ganz besonders bevorzugt 23 bis 28 Gew.-%. Mit diesen bevorzugten Ausführungsformen ist die Viskosität und Klebrigkeit des Klebemittels weiter optimiert.

Gemäß einer weiteren bevorzugten Ausführungsform der Erfindung beträgt die Menge des wenigstens einen Butylkautschuks 51 bis 80 Gew.-%.

An dieser Stelle wird betont, dass das Klebemittel im Falle eines Fahrzeugluftreifens als technischem Gummiartikel nicht die üblicherweise vorhandene Innenschicht des Fahrzeugluftreifens ersetzt. Stattdessen weist der Fahrzeugluftreifen alle sonstigen Komponenten (also Laufstreifen, Seitenwand, Karkasslage, Gürtel, Innenschicht etc.) wie im Stand der Technik bekannt auf.

Gemäß einer beispielhaften Ausführungsform der Erfindung weist der Fahrzeugluftreifen eine Innenschicht (Innerliner) auf, die wenigstens einen Halo-Butylkautschuk und/oder wenigstens einen Butylkautschuk enthält, wobei das Klebemittel enthaltend die oben genannten Bestandteile im Reifeninneren insbesondere auf der nach radial innen gerichteten Oberfläche der Innenschicht zur Befestigung der mindestens einen Sende- und/oder Empfangsvorrichtung haftet.

Gemäß einer weiteren vorteilhaften Ausführungsform der Erfindung enthält das Klebemittel 10 bis 80 Gew.-% wenigstens eines Kautschuks, wobei der Kautschuk ausgewählt ist aus der Gruppe bestehend aus Naturkautschuk (NR), synthetisches Polyisopren (IR), Butadien-Kautschuk (BR), Styrol-Butadien-Kautschuk (SBR) und Halobutyl-Kautschuk.

Gemäß einer bevorzugten Ausführungsform der Erfindung beträgt dabei die Menge des wenigstens einen Kautschuks 30 bis 60 Gew.-%, bevorzugt 40 bis 55 Gew.-%, besonders bevorzugt 45 bis 50 Gew.-%.

Gemäß einer weiteren bevorzugten Ausführungsform der Erfindung beträgt die Menge des wenigstens eines Kautschuks dabei bis zu 80 Gew.-%, insbesondere 60 bis 80 Gew.-%.

Gemäß einer weiteren bevorzugten Ausführungsform der Erfindung enthält das Klebemittel wenigstens einen Butylkautschuk und wenigstens einen Kautschuk, der ausgewählt ist aus der Gruppe bestehend aus Naturkautschuk (NR), synthetisches Polyisopren (IR), Butadien-Kautschuk (BR), Styrol-Butadien-Kautschuk (SBR) und Halobutyl-Kautschuk, wobei die Gesamtmenge 10 bis 80 Gew.-% beträgt.

Hierbei sind sämtliche Mengenverhältnisse an Butyl-Kautschuk zu übrigem Kautschuk denkbar. Gemäß einer vorteilhaften Weiterbildung der Erfindung sind bezogen auf die Gesamtmenge an enthaltenen Kautschuken davon 50 bis 99 Gew.-% Kautschuke ausgewählt aus der Gruppe bestehend aus Naturkautschuk (NR), synthetisches Polyisopren (IR), Butadien-Kautschuk (BR), Styrol-Butadien-Kautschuk (SBR) und Halobutyl-Kautschuk und 1 bis 50 Gew.-% wenigstens eines Butyl-Kautschukes.

Gemäß vorliegender Erfindung enthält das Klebemittel 11 bis 80 Gew.-% wenigstens eines Polyolefins. Bevorzugt beträgt die Menge des wenigstens einen Polyolefins 35 bis 80 Gew.-%, besonders bevorzugt 35 bis 70 Gew.-%, wiederum besonders bevorzugt 35 bis 60 Gew.-%, ganz besonders bevorzugt 35 bis 57 Gew.-%. Mit derartigen Mengen werden ein optimales Fließverhalten und eine optimale Klebrigkeit bei einer gleichzeitig guten Herstellbarkeit (Prozessierbarkeit) des Klebemittels erzielt.

Das wenigstens eine Polyolefin weist bevorzugt ein Zahlenmittel der Molekulargewichtsverteilung Mn gemäß GPC von 0,1 bis 5 kg/mol, besonders bevorzugt 0,4 bis 1,6 kg/mol, ganz besonders bevorzugt 0,4 bis 1,4 kg/mol, wiederum bevorzugt 1 bis 1,4 kg/mol, wiederum besonders bevorzugt 1,1 bis 1,4 kg/mol, beispielsweise 1,3 kg/mol, auf.

Ein Polyolefin mit den genannten Bereichen für das Mn ist besonders geeignet, um die gewünschte Fließfähigkeit bei gleichzeitig starker Klebrigkeit des Klebemittels zu erzeugen.

Hierbei ist es besonders bevorzugt, dass das wenigstens eine Polyolefin wenigstens ein Polybuten ist.

Polybuten ist besonders geeignet, um die gewünschten Eigenschaften des Klebemittels einzustellen. Für das wenigstens eine Polybuten gelten insbesondere die oben genannten bevorzugten, besonders bevorzugten usw. Zahlenmittel der Molekulargewichtsverteilung Mn.

Derartige Polybutene sind im Handel erhältlich.

Gemäß einer besonders vorteilhaften Weiterbildung der Erfindung weist das wenigstens eine Polyolefin einen Chlorgehalt von kleiner oder gleich 5 mg/kg, bevorzugt kleiner oder gleich 3 mg/kg, auf. Die Angabe bezieht sich auf mg Chlor pro einem kg des Polyolefins. In einer bevorzugten Ausführungsform der Erfindung enthält das Klebemittel wenigstens ein Polyolefin mit einem Chlorgehalt von kleiner oder gleich 1,5 mg/kg, besonders bevorzugt kleiner als 1 mg/kg. Bevorzugt ist das Polyolefin hierbei ein Polybuten.

Gemäß einer besonders bevorzugten Ausführungsform der Erfindung enthält das Klebemittel somit wenigstens ein Polybuten mit einem Chlorgehalt von kleiner oder gleich 5 mg/kg, bevorzugt kleiner oder gleich 3 mg/kg, besonders bevorzugt kleiner als 1 mg/kg. Geeignete Polybutene, auch Polyisobutene genannt, sind beispielsweise unter den Handelsnamen Glissopal^{®} der Firma BASF bekannt. Insbesondere geeignet sind hierbei Glissopal^{®} V-500, V-640 oder V-190.

Das Klebemittel enthält erfindungsgemäß 2 bis 20 Gew.-% wenigstens eines Kohlenwasserstoffharzes. Bevorzugt beträgt die Menge des wenigstens einen Kohlenwasserstoffharzes 5 bis 10 Gew.-%, besonders bevorzugt 5 bis 8 Gew.-%, ganz besonders bevorzugt 5 bis 6,5 Gew.-%.

Mit derartigen bevorzugten und besonders bevorzugten Mengen werden die Klebrigkeit und die Viskosität des Klebemittels weiter optimiert.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist.

Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können.

Das Kohlenwasserstoffharz kann ein Homopolymer oder ein Copolymer sein. Unter Homopolymer wird in der vorliegenden Anmeldung ein Polymer verstanden, welches gemäß Römpp Online (Auszug vom 02.01.2017, letzte Aktualisierung des Artikels August 2008) "aus Monomeren nur einer Art entstanden ist".

Unter Copolymer wird im Rahmen der vorliegenden Erfindung ein Polymer verstanden, welches aus mehreren, d.h. zwei oder mehr, verschiedenen Monomeren aufgebaut ist. Im Rahmen der vorliegenden Erfindung kann das Kohlenwasserstoffharz daher z.B. auch ein Copolymer aus drei verschiedenen Monomeren sein.

Bei den Monomeren kann es sich um alle dem Fachmann bekannten Monomere von Kohlenwasserstoffharzen handeln, wie aliphatische Monomere, insbesondere aliphatische C₅-Monomere, weitere ungesättigte Verbindungen, die kationisch polymerisiert werden können, enthaltend Aromaten und/oder Terpene und/oder Alkene und/oder Cycloalkene.

Bevorzugte Monomere sind insbesondere C₅ und C₉-Monomere.

Bei den Aromaten (aromatische Monomere) kann es sich beispielsweise um alpha-Methylstyrol und/oder Styrol und/oder Vinyltoluol und/oder Inden und/oder Cumaron und/oder Methylinden und/oder Methylcumaron und/oder Phenol handeln. Bevorzugt handelt es sich bei den aromatischen Monomeren um alpha-Methylstyrol und/oder Styrol und/oder Vinyltoluol und/oder Inden und/oder Cumaron und/oder Methylinden und/oder Methylcumaron.

Gemäß einer bevorzugten Ausführungsform der Erfindung umfasst das wenigstens eine Kohlenwasserstoffharz kein phenolisches Kohlenwasserstoffharz, bzw. basiert das wenigstens eine Kohlenwasserstoffharz bevorzugt nicht auf Phenol als Monomer. Im Falle eines Gemisches aus wenigsten zwei Kohlenwasserstoffharzen basiert somit bevorzugt keines auf Phenol als Monomer. Das Klebemittel ist somit gemäß einer bevorzugten Ausführungsform der Erfindung frei von Phenolharzen, d. h. enthält 0 bis 0,1 Gew.-%, idealerweise 0 Gew.-% Phenolharze.

Gemäß Römpp Online ist der Begriff "Olefine" die "Gruppenbezeichnung für acyclische und cyclische aliphatische Kohlenwasserstoffe mit einer oder mehreren reaktiven C=C-Doppelbindungen im Molekül, die heute besser als Alkene bzw. Cycloalkene bezeichnet werden, in weiterem Sinne auch Bezeichnung für deren substituierte Derivate...." Im Rahmen der vorliegenden Erfindung werden daher ungesättigte Terpene, Alkene und Cycloalkene unter den Oberbegriff Olefine zusammengefasst.

Bei den Alkenen kann es sich beispielsweise um 1-Buten und/oder 2-Buten und/oder Butadien handeln.

Gemäß einer bevorzugten Ausführungsform der Erfindung handelt es sich bei dem Kohlenwasserstoffharz um wenigstens ein aliphatisches Harz, also ein Harz welches keine aromatischen Ringsysteme enthält. Ein derartiges Harz besteht zu 100 Gew.-% aus aliphatischen Monomeren bzw. dessen Derivaten.

Gemäß einer weiteren Ausführungsform der Erfindung besteht das Harz zu 10 bis 99 Gew.-%, bevorzugt 50 bis 99 Gew.-%, besonders bevorzugt 70 bis 99 Gew.-%, aus aliphatischen und zu 1 bis 90 Gew.-%, bevorzugt 1 bis 50 Gew.-%, besonders bevorzugt 1 bis 30 Gew.-% aus aromatischen Monomeren.

Gemäß einer besonders bevorzugten Ausführungsform der Erfindung handelt es sich bei dem Kohlenwasserstoffharz um wenigstens ein Harz, welches wenigstens aus C₅-Monomeren aufgebaut ist und dem Fachmann als sogenanntes C₅-Harz bekannt ist. Hiermit werden besonders gute Eigenschaften des Klebemittels, insbesondere ein optimiertes Fließverhalten bei gleichzeitig guter Klebrigkeit, erzielt.

Bei den aliphatischen C₅-Monomeren kann es sich um Monomere der C₅-Erdölfraktion, z.B. Tsopren, und/oder Monomere der Terpene und/oder Cycloolefine und/oder Olefine, wie z.B. Penten, handeln. Unter C₅ ist zu verstehen, dass diese Monomere aus fünf Kohlenstoffatomen aufgebaut sind.

Ferner ist dem Fachmann bekannt, dass die Cs-Erdölfraktion außer aliphatischen Monomeren mit fünf Kohlenstoffatomen andere aliphatische Monomere (Bausteine) mit z.B. vier, also C₄-Monomere, oder sechs Kohlenstoffatomen, C₆-Monomere, enthalten kann.

Gemäß einer vorteilhaften Ausführungsform der Erfindung enthält das Klebemittel 1 bis 50 Gew.-% wenigstens eines Füllstoffs, wodurch die Viskosität des Klebemittels optimal eingestellt werden kann. Die Menge des wenigstens einen Füllstoffs beträgt hierzu besonders bevorzugt 1 bis 35 Gew.-%, wiederum besonders bevorzugt 5 bis 35 Gew.-%, ganz besonders bevorzugt 5 bis 20 Gew.-%, und dabei insbesondere besonders bevorzugt 5 bis 15 Gew.-%, wiederum insbesondere besonders bevorzugt 5 bis 10 Gew.-%, bezogen auf die Gesamtmenge an Klebemittel.

Bei dem Füllstoff kann es sich um alle dem Fachmann bekannten Füllstoffe handeln, wie insbesondere verstärkende Füllstoffe, wie Ruß und/oder Kieselsäure, wobei insbesondere gefällte Kieselsäuren gemeint und bevorzugt sind, die als Füllstoffe für Reifenkautschukmischungen bekannt sind.

Ferner sind weitere verstärkende und nicht verstärkende Füllstoffe, insbesondere Siliziumoxid basierte Füllstoffe, wie Silikate oder Sand, denkbar.

Zu den weiteren nicht verstärkenden Füllstoffen zählen im Rahmen der vorliegenden Erfindung Alumosilicate, Sand, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern) Weitere ggf. verstärkende Füllstoffe sind z.B. Graphit und Graphene und sogenannte "carbon-silica dual-phase filler".

Gemäß einer bevorzugten Ausführungsform der Erfindung umfasst der Füllstoff wenigstens einen Ruß. Dies hat den Vorteil, dass die Kohäsion des Klebemittels erhöht und die Klebrigkeit des Klebemittels während des Herstellverfahrens erniedrigt wird. Gleichzeitig werden die Ortsfestigkeit und die Reißeigenschaften des Klebemittels verbessert.

Als Ruße sind im Rahmen der vorliegenden Erfindung prinzipiell alle dem Fachmann bekannten Ruß-Typen denkbar.

Gemäß einer vorteilhaften Ausführungsform der Erfindung wird ein Ruß eingesetzt, der eine Jodadsorptionszahl gemäß ASTM D 1510 von 20 bis 180 g/kg, besonders bevorzugt 30 bis 140 g/kg, und eine DBP-Zahl gemäß ASTM D 2414 von 30 bis 200 ml/100 g, bevorzugt 90 bis 180 ml/100g, besonders bevorzugt 110 bis 180 ml/100g, aufweist.

Gemäß einer weiteren bevorzugten Ausführungsform der Erfindung wird ein Ruß des Typs N326 verwendet.

Es ist auch ein Gemisch von zwei oder mehreren Rußen denkbar.

Gemäß einer weiteren bevorzugten Ausführungsform der Erfindung umfasst der Füllstoff wenigstens eine Kieselsäure (engl. "silica").

Hierdurch wird eine optimale Verstärkung des Klebemittels erzielt und eine gute Viskositätskontrolle und -einstellung ermöglicht. Zudem wird mit wenigstens einer Kieselsäure die Kohäsion des Klebemittels erhöht und die Klebrigkeit des Klebemittels während des Herstellverfahrens erniedrigt wird. Gleichzeitig werden die Ortsfestigkeit und die Reißeigenschaften des Klebemittels verbessert.

Es ist auch ein Gemisch von zwei oder mehreren Kieselsäuren denkbar.

Bei den Kieselsäuren kann es sich um die dem Fachmann bekannten Kieselsäuren, die als Füllstoff für Reifenkautschukmischungen geeignet sind, handeln. Als Kieselsäuren können somit z. B. sowohl jene des Typs Ultrasil^{®} VN3 (Handelsname) der Firma Evonik als auch Kieselsäuren mit einer vergleichsweise niedrigen BET-Oberfläche (wie z. B. Zeosil^{®} 1115 oder Zeosil^{®} 1085 der Firma Solvay) als auch hoch dispergierbare Kieselsäuren, so genannte HD-Kieselsäuren (z. B. Zeosil^{®} 1165 MP der Firma Solvay) verwendet werden.

Ferner ist ein Gemisch der genannten Füllstoffe denkbar und bevorzugt, wie insbesondere wenigstens ein Ruß in Kombination mit wenigstens einer Kieselsäure, wobei sich ebenfalls die genannten Vorteile ergeben.

Gemäß einer besonders vorteilhaften Ausführungsform der Erfindung ist das Klebemittel frei von peroxidischen Verbindungen, d. h. es enthält gemäß dieser Ausführungsform 0 bis 0,001 Gew.-%, idealerweise 0 Gew.-% derartiger Verbindungen, wobei sich die Mengenangabe auf jede Substanz einzeln bezieht.

Gemäß einer besonders vorteilhaften Ausführungsform der Erfindung ist das Klebemittel frei Vulkanisationsagenzien und Metalloxiden, d. h. es enthält gemäß dieser Ausführungsform 0 bis 0,001 Gew.-%, idealerweise 0 Gew.-% derartiger Verbindungen, wobei sich die Mengenangabe auf jede Substanz einzeln bezieht. Somit enthält das Klebemittel besonders bevorzugt keine Substanzen, die zu einer Vernetzung des Klebemittels führen würden und in aus dem Stand der Technik bekannten Dichtmitteln enthalten sind. Das Klebemittel ist somit im Vergleich zu Dichtmitteln vergleichsweise einfach und kostengünstig zusammengesetzt und weist zudem eine optimierte Viskosität auf.

Typische Substanzen, die gemäß dieser bevorzugten Ausführungsformen der Erfindung nicht oder nur in den jeweiligen Mengen enthalten sind, sind:
von 0 bis 0,001 Gew.-% Peroxide, z. B. Dibenzoylperoxid
und bevorzugt dabei zudem:
   von 0 bis 0,001 Gew.-% Zinkoxid,
   von 0 bis 0,001 Gew.-% Chinone, z. B. Chinondioxim,

Das Klebemittel kann ferner weitere Bestandteile enthalten wie insbesondere Weichmacher, wie z. B. Öl(e).

Gemäß einer bevorzugten Ausführungsform der Erfindung enthält das Klebemittel 0,2 bis 12 Gew.-% wenigstens eines Weichmachers, wobei es insbesondere und bevorzugt ein Gemisch von zwei verschiedenen Weichmachern enthält.

Durch die Verwendung von 0,2 bis 12 Gew.-%, bevorzugt 2 bis 6 Gew.-%, wenigstens eines Weichmachers wird eine gute Verarbeitbarkeit und eine weiter optimierte Viskosität des Klebemittels erzielt.

Bei den Weichmachern kann es sich um alle dem Fachmann bekannten Weichmacher, insbesondere Öle, handeln, wie insbesondere aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346. Mineralöle sind als Weichmacher besonders bevorzugt.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Gemäß vorteilhafter Ausführungsfortnen der Erfindung enthält das Klebemittel aus Kautschuk, Polyolefin, Kohlenwasserstoffharz, Füllstoff und Weichmacher, wobei die obigen Ausführungen zu Art und Menge der jeweiligen Substanzen gelten. Insbesondere besteht das Klebemittel gemäß einer bevorzugten Ausführungsform der Erfindung aus
- 10 bis 80 Gew.-% wenigstens eines Kautschuks, der ausgewählt ist aus der Gruppe bestehend aus Naturkautschuk (NR), synthetischem Polyisopren (IR), Butadien-Kautschuk (BR), Styrol-Butadien-Kautschuk (SBR), Butyl-Kautschuk (IIR) und Halobutyl-Kautschuk, und
- 11 bis 80 Gew.-% wenigstens eines Polyolefins, und
- 2 bis 20 Gew.-% wenigstens eines Kohlenwasserstoffharzes, und
- 1 bis 50 Gew.-% wenigstens eines Füllstoffs, und
- 0,2 bis 12 Gew.-% wenigstens eines Weichmachers.

Hierbei ergibt die Summe der genannten Bestandteile 100 Gew.-%.

Ein derartiges Klebemittel ist besonders hinsichtlich Verarbeitbarkeit, Fließverhalten und Ortsfestigkeit optimiert. Es weist zudem aufgrund der Zusammensetzung eine optimale Klebrigkeit auf.

Das Klebemittel wird insbesondere durch - bevorzugt intensives - Vermischen der Substanzen hergestellt, wobei dies in einer oder mehreren Mischstufen erfolgen kann. Hierbei können die dem Fachmann bekannten Mischvorrichtungen, wie Innenmischer und/oder Extruder, verwendet werden. Auch die Mischdauer und Mischtemperatur können je nach Zusammensetzung und Viskosität des Klebemittels eingestellt werden.

Beispielsweise kann das Klebemittel auch in einem Extruder, bevorzugt einem Doppelschneckenextruder, hergestellt werden.

Ferner ist es denkbar, dass das Klebemittel zur - bevorzugt zwischenzeitlichen - Verringerung der Viskosität unter Zuhilfenahme von Lösungsmitteln gemischt wird.

Das Klebemittel kann auf jede dem Fachmann bekannte Weise auf den technischen Gummiartikel Fläche aufgebracht werden.

Beispielsweise wird es durch Aufsprühen oder mit einer Hochdruckpumpe oder mit Hilfe eines Roboters in spiralförmigen Spuren aufgebracht.

Das Klebemittel wird bevorzugt mit einer Schichtdicke (in radialer Richtung) von 0,05 bis 10 mm, beispielsweise 0,5 bis 2 mm, aufgetragen. Das Klebemittel kann dabei vollflächig oder nur in bestimmten Bereichen aufgebracht werden.

Die Dicke und Menge an Klebemittel richtet sich nach der zu befestigenden Sende- und/oder Empfangsvorrichtung.

Im Folgenden soll die Erfindung anhand eines Ausführungsbeispiels näher erläutert werden.

Der technische Gummiartikel ist beispielsweise ein Fahrzeugluftreifen.

Auf die Reifeninnenfläche, also auf die Innenschicht, ist beispielsweise ein RFID-Transponder mittels eines Klebemittels angebracht.

Das Klebemittel besteht beispielsweise aus folgenden Substanzen:
27,3 Gew.-% Butylkautschuk,
55,8 Gew.-% Polybuten mit einem Mn von 1300 g/mol,
5,3 Gew.-% aliphatisches Kohlenwasserstoffharz (Cs-Harz),
8,4 Gew.-% Ruß N326 als Füllstoff,
3,2 Gew.-% Mineralölweichmacher.

## Patentansprüche

1. Technischer Gummiartikel aufweisend mindestens eine Sende- und/oder Empfangsvorrichtung **dadurch gekennzeichnet, dass** die mindestens eine Sende- und/oder Empfangsvorrichtung mittels eines Klebemittels haftend an dem technischen Gummiartikel angebracht ist, wobei das Klebemittel wenigstens folgende Bestandteile enthält:
- 10 bis 80 Gew.-% wenigstens eines Kautschuks, und
- 11 bis 80 Gew.-% wenigstens eines Polyolefins, und
- 2 bis 20 Gew.-% wenigstens eines Kohlenwasserstoffharzes.

2. Technischer Gummiartikel nach Anspruch 1, **dadurch gekennzeichnet, dass** er ein Fahrzeugreifen ist.

3. Technischer Gummiartikel nach einem der Ansprüche 1 oder 2, **dadurch gekennzeichnet, dass** mindestens eine Sende- und/oder Empfangsvorrichtung ein Transponder, insbesondere ein Radiofrequenzidentifizierungstransponder (RFID-Transponder) ist.

4. Technischer Gummiartikel nach einem der vorherigen Ansprüche, **dadurch gekennzeichnet, dass** mindestens eine Sende- und/oder Empfangsvorrichtung ein Sensor, insbesondere ein Drucksensor, ist.

5. Technischer Gummiartikel nach einem der vorherigen Ansprüche, **dadurch gekennzeichnet, dass** der Kautschuk ausgewählt ist aus der Gruppe bestehend aus Naturkautschuk (NR), synthetischem Polyisopren (IR), Butadien-Kautschuk (BR), Styrol-Butadien-Kautschuk (SBR), Butyl-Kautschuk (IIR) und Halobutyl-Kautschuk.

6. Technischer Gummiartikel nach einem der vorherigen Ansprüche, **dadurch gekennzeichnet, dass** das Klebemittel 1 bis 35 Gew.-% wenigstens eines Füllstoffs enthält.

7. Technischer Gummiartikel nach einem der vorherigen Ansprüche, **dadurch gekennzeichnet, dass** das Klebemittel frei von Vulkanisationsagenzien, Metalloxiden und peroxidischen Verbindungen ist.

8. Technischer Gummiartikel nach einem der vorherigen Ansprüche, **dadurch gekennzeichnet, dass** das wenigstens eine Polyolefin wenigstens ein Polybuten ist.

9. Verwendung einer Klebemittelzusammensetzung zur Befestigung mindestens einer Sende- und/oder Empfangsvorrichtung auf einer Fläche eines technischen Gummiartikels, **dadurch gekennzeichnet, dass** die Zusammensetzung wenigstens die folgenden Bestandteile enthält:
- 10 bis 80 Gew.-% wenigstens eines Kautschuks, und
- 11 bis 80 Gew.-% wenigstens eines Polyolefins, und
- 2 bis 20 Gew.-% wenigstens eines Kohlenwasserstoffharzes.

## Claims

1. Technical rubber article comprising at least one transmitting and/or receiving apparatus, **characterized in that** the at least one transmitting and/or receiving apparatus is adhesively attached to the technical rubber article by means of at least one adhesive, wherein the adhesive contains at least the following constituents:
- 10% to 80% by weight of at least one rubber and
- 11% to 80% of at least one polyolefin and
- 2% to 20% of at least one hydrocarbon resin.

2. Technical rubber article according to claim 1, **characterized in that** it is a vehicle tire.

3. Technical rubber article according to either of claims 1 or 2, **characterized in that** the at least one transmitting and/or receiving apparatus is a transponder, in particular a radiofrequency identification transponder (RFID transponder).

4. Technical rubber article according to any of the preceding claims, **characterized in that** the at least one transmitting and/or receiving apparatus is a sensor, in particular a pressure sensor.

5. Technical rubber article according to any of the preceding claims, **characterized in that** the rubber is selected from the group consisting of natural rubber (NR), synthetic polyisobutene (IR), butadiene rubber (BR), styrene-butadiene rubber (SBR), butyl rubber (IIR) and halobutyl rubber.

6. Technical rubber article according to any of the preceding claims, **characterized in that** the adhesive contains 1% to 35% by weight of at least one filler.

7. Technical rubber article according to any of the preceding claims, **characterized in that** the adhesive is free from vulcanization agents, metal oxides and peroxidic compounds.

8. Technical rubber article according to any of the preceding claims, **characterized in that** the at least one polyolefin is at least one polybutene.

9. Use of an adhesive composition for securing at least one transmitting and/or receiving apparatus to a surface of a technical rubber article, **characterized in that** the composition contains at least the following constituents:
- 10% to 80% by weight of at least one rubber and
- 11% to 80% of at least one polyolefin and
- 2% to 20% of at least one hydrocarbon resin.

## Revendications

1. Article technique en caoutchouc comportant au moins un dispositif émetteur et/ou récepteur, **caractérisé en ce que** l'au moins un dispositif émetteur et/ou récepteur est fixé à l'article technique en caoutchouc au moyen d'un adhésif, l'adhésif contenant au moins les composants suivants :
- 10 à 80 % en poids d'au moins un caoutchouc, et
- 11 à 80 % en poids d'au moins une polyoléfine, et
- 2 à 20 % en poids d'au moins une résine hydrocarbonée.

2. Article technique en caoutchouc selon la revendication 1, **caractérisé en ce que** ledit article est un pneumatique de véhicule.

3. Article technique en caoutchouc selon l'une des revendications 1 ou 2, **caractérisé en ce qu'**au moins un dispositif émetteur et/ou récepteur est un transpondeur, notamment un transpondeur d'identification par radiofréquence (transpondeur RFID).

4. Article technique en caoutchouc selon l'une des revendications précédentes, **caractérisé en ce qu'**au moins un dispositif émetteur et/ou récepteur est un capteur, notamment un capteur de pression.

5. Article technique en caoutchouc selon l'une des revendications précédentes, **caractérisé en ce que** le caoutchouc est choisi dans le groupe comprenant le caoutchouc naturel (NR), le polyisoprène synthétique (IR), le caoutchouc butadiène (BR), le caoutchouc styrène-butadiène (SBR), le caoutchouc butyle (IIR) et le caoutchouc halobutyle.

6. Article technique en caoutchouc selon l'une des revendications précédentes, **caractérisé en ce que** l'adhésif contient de 1 à 35 % en poids d'au moins une charge.

7. Article technique en caoutchouc selon l'une des revendications précédentes, **caractérisé en ce que** l'adhésif est exempt d'agents de vulcanisation, d'oxydes métalliques et de composés peroxydés.

8. Article technique en caoutchouc selon l'une des revendications précédentes, **caractérisé en ce que** l'au moins une polyolfine est au moins un polybutène.

9. Utilisation d'une composition adhésive pour fixer au moins un dispositif émetteur et/ou récepteur sur une surface d'un article technique en caoutchouc, **caractérisée en ce que** la composition contient au moins les composants suivants :
- 10 à 80 % en poids d'au moins un caoutchouc, et
- 11 à 80 % en poids d'au moins une polyoléfine, et
- 2 à 20 % en poids d'au moins une résine hydrocarbonée.
